# EUROPEAN PATENT SPECIFICATION

(11) **EP 3 163 569 B1**
(45) Date of publication and mention of the grant of the patent: **06.04.2022**
(21) Application number: 16166822.3
(22) Date of filing: 25.04.2016
(51) Int. Cl.: G10L 15/22

(54) **METHOD AND DEVICE FOR CONTROLLING A SMART DEVICE BY VOICE, COMPUTER PROGRAM AND RECORDING MEDIUM**
VERFAHREN UND VORRICHTUNG ZUR STEUERUNG EINER INTELLIGENTEN VORRICHTUNG MITTELS SPRACHE, COMPUTERPROGRAMM UND SPEICHERMEDIUM
PROCÉDÉ ET DISPOSITIF POUR COMMANDER UN DISPOSITIF INTELLIGENT PAR LA VOIX, PROGRAMME D'ORDINATEUR ET SUPPORT D'ENREGISTREMENT

(30) Priority: 28.10.2015 CN 201510712870
(43) Date of publication of application: 03.05.2017
(73) Proprietor: Xiaomi Inc., Beijing 100085 (CN)
(72) Inventor: GAO, Sitai, 100085 BEIJING (CN); DING, Yi, 100085 BEIJING (CN); HOU, Enxing, 100085 BEIJING (CN)
(74) Representative: Cabinet Beau de Loménie

(56) References cited:
- WO-A1-2014/064324
- US-A1- 2007 033 005
- US-A1- 2014 229 184
- US-A1- 2015 006 184

## Description

### TECHNICAL FIELD

The present disclosure relates to the field of smart home technologies, and more particularly, to a method and a device for controlling a smart device by voice.

### BACKGROUND

The existing voice recognition technologies use a processing chip having the best performance and an omnidirectional microphone, and can reach a 3-meter-recognition distance in an ideal situation. Generally a large conference room is equipped with multiple microphones situated in different locations of the conference room, and a voice emitted from a source and collected by the multiple microphones is processed to achieve a satisfying voice recognition effect.

In related art, in order to achieve the foregoing voice recognition effect in a home environment, multiple microphones need to be arranged in different locations according to arrangement of furniture and appliances, which therefore causes a high cost.

Document US 2014/0229184 discloses a main device and a number of secondary devices positioned throughout an environment, wherein the main device may control the operation of other devices or appliances in the environment. When the main device detects trigger signal inputs from the environment, it may output a wake-up signal instructing at least one of the secondary devices to "wake-up" from a low power state and begin detecting detecting speech. The detected speech signals may be transmitted by the secondary devices to the main device. The main device may receive the input speech signals from the secondary devices and begin processing the data. The audio signals may be combined in a manner to enhance the signal to be used for recognition. Speech detected by the main device and the secondary devices may be transmitted to a local control device, or be sent to a remote server. Upon recognition of the speech at the local control device or the remote server, command signals may be transmitted to the respective appliances (television, audio/entertainment device, gaming devices or the like). The main device may be a user device, such as a smartphone, wherein the user device may announce its presence in the environment using Bluetooth by sending wake-up signals to the secondary devices and may cause particular ones of the secondary devices to wakeup by being within a certain range of the particular of secondary device.

WO 2014/064324 A1 discloses identifying one or more devices in physical proximity of a user of a principal device, receiving multiple audio samples captured by the identified devices, and selecting an audio sample comprising a voice of the user of the principal device from among the multiple audio samples captured by the identified devices based on suitability of the audio sample for speech recognition.

### SUMMARY

In order to overcome problems in related art, according to the present invention, there are provided a method and a device for controlling a smart device by voice, a computer program and a recording medium, as set forth in the appended independent claims. Preferred embodiments of the present invention are defined by the appended dependent claims.

The technical solution provided by the embodiments of the present invention includes the following beneficial effects.

The control device of the present invention processes voice data from different locations to obtain optimized voice data, and controls, based on the optimized voice data, the smart device corresponding to the optimized voice data, thereby achieving a voice control on the smart device, providing convenience for the user to control the smart device, and optimizing the user experience.

The control device of the present invention receives voice data collected by smart devices located in multiple positions, and processes the voice data from different positions to obtain optimized voice data, thereby ensuring the quality of the optimized voice data, ensuring the accuracy in voice recognition, and achieving the voice control on the smart devices.

The recording medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

It is to be understood that the following detailed description is exemplary and explanatory only and not restrictive of the present invention defined by the appended independent claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flow chart of steps of a method for controlling a smart device by voice according to an exemplary embodiment of the present disclosure.
FIG. 2 is a flow chart of other steps of the method for controlling a smart device by voice according to an exemplary embodiment of the present disclosure.
FIG. 3 is a flow chart of another method for controlling a smart device by voice according to an exemplary embodiment of the present disclosure.
FIG. 4 shows a scenario of voice control on a smart device according to an exemplary embodiment of the present disclosure.
FIG. 5 is a block diagram of a device for controlling a smart device by voice according to an exemplary embodiment of the present disclosure.
FIG. 6 is a block diagram of another device for controlling a smart device by voice according to an exemplary embodiment of the present disclosure.
FIG. 7 is a block diagram of another device for controlling a smart device by voice according to an exemplary embodiment of the present disclosure.
FIG. 8 is a block diagram of another device for controlling a smart device by voice according to an exemplary embodiment of the present disclosure.
FIG. 9 is a block diagram of another device for controlling a smart device by voice according to an exemplary embodiment of the present disclosure.
FIG. 10 is a block diagram of another device for controlling a smart device by voice according to an exemplary embodiment of the present disclosure.
FIG. 11 is a block diagram of another device for controlling a smart device by voice according to an exemplary embodiment of the present disclosure.
FIG. 12 is a block diagram of another device for controlling a smart device by voice according to an exemplary embodiment of the present disclosure.
FIG. 13 is a block diagram of another device for controlling a smart device by voice according to an exemplary embodiment of the present disclosure.
FIG. 14 is a block diagram of another device for controlling a smart device by voice according to an exemplary embodiment of the present disclosure.
FIG. 15 is a block diagram of another device for controlling a smart device by voice according to an exemplary embodiment of the present disclosure.
FIG. 16 is a schematic structural diagram of a device for controlling a smart device by voice according to an exemplary embodiment of the present disclosure.
FIG. 17 is a schematic structural diagram of a device for controlling a smart device by voice according to an exemplary embodiment of the present disclosure.

### DETAILED DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

Terms used in the present disclosure are only for the purpose of description of specific embodiments, and are not intended to limit the present disclosure. As used in the present disclosure and appended claims, the singular forms "a/an", "said" and "the" intend to also include the plural form, unless the content clearly dictates otherwise. It should also be understood that the term "and/or" used herein means to include arbitrary and all possible combinations of one or more items listed in association.

It should be understood that terms such as "first", "second", "third" and the like may be used herein for description of information. However, the information shall not be restricted to these terms. These terms are only intended to distinguish among information of the same type. For example, under the circumstance of not departing from the scope of the present disclosure, a first information can also be referred to as a second information, similarly, a second information can also be referred to as a first information. Depending on the context, term "if" used herein can be interpreted as "when", "while" or "in response to determining".

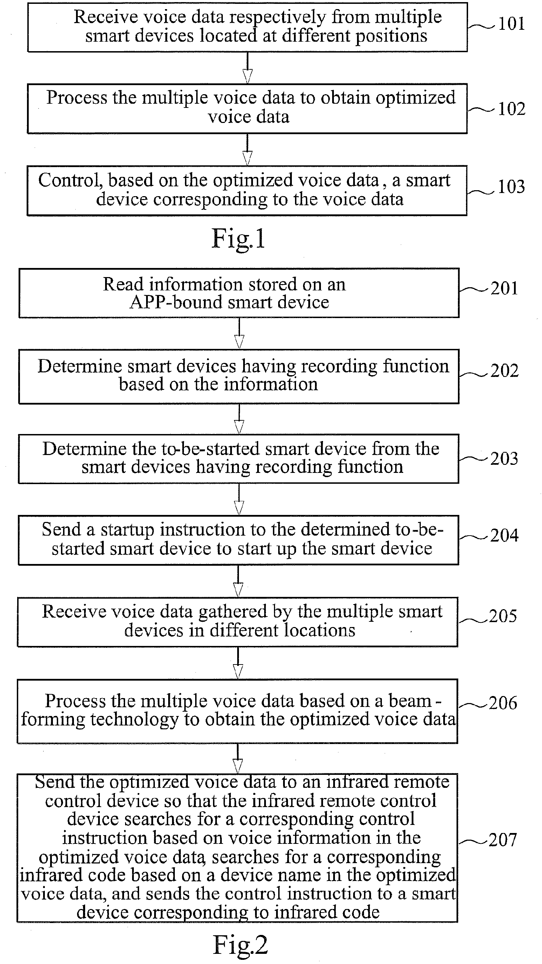

As shown in FIG. 1, which is a flow chart of steps of a method for controlling a smart device by voice according to an exemplary embodiment of the present disclosure, the method may be used in a control device such as a terminal, including the following steps.

In Step 101, voice data is received respectively from multiple smart devices located at different positions. For example, the voice data may be obtained by these multiple smart devices from a voice emitted by a source, for example, a word or sentence pronounced by a user.

The terminal of the present disclosure may be any smart terminal with Internet accessing function, for example, a mobile phone, a tablet, a PDA (Personal Digital Assistant) and so on. The terminal may be connected to a router via a WLAN and access a server in the public network via the router. The terminal of the present disclosure may receive the voice data by means of an APP (Application) such as Smarthome APP.

The smart device of the present disclosure includes a smart appliance, a wearable device and so on. And the smart device has a communication module such as a WiFi (Wireless Fidelity) module for communicating with the terminal and a control center via a home router. The control center may be the infrared remote control center for controlling various smart devices.

In Step 102, the multiple voice data is processed to obtain optimized voice data.

In this step of the present disclosure, the multiple voice data is processed by using a beam-forming technology to obtain the optimized voice data.

In Step 103, a smart device that corresponds to the voice data is controlled based on the optimized voice data. In other words, a smart device at which the voice (i.e. the voice for which voice data is collected by the multiple smart devices) aims is identified according to the optimized voice data, and the smart device is controlled according to the optimized voice data.

In the foregoing embodiment, the control device may process the voice data received from the multiple smart devices located at different positions to obtain optimized voice data and control the smart device that corresponds to the optimized voice data based on the optimized voice data, thereby achieving a voice control on the smart device. Furthermore, the optimized voice data is obtained by processing the voice data from different positions, which ensures the quality of the optimized voice data, the accuracy in voice recognition in the voice control on the smart device.

As shown in FIG. 2, which is a flow chart of other steps of the method for controlling a smart device by voice shown according to an exemplary embodiment, the method may be used in the control device such as the terminal, including the following steps.

In Step 201, information stored on a smart device is read, a software application being installed in the smart device.

In Step 202, smart devices having voice recording function are determined based on the information.

In this embodiment of the present disclosure, the terminal may receive the voice data and control the smart device based on the Smarthome APP. The Smarthome APP is associated with multiple smart devices and stores their information. The terminal may determine which smart devices having voice recording function by reading the information.

In Step 203, the to-be-started smart device is determined from the smart devices having voice recording function.

In this embodiment of the present disclosure, the terminal needs to determine the to-be-started smart device, namely, the smart device to collect the voice data.

In one manner, the Smarthome APP of the terminal may display all the smart devices having voice recording function among binding smart devices for the user to select. The user may select part or all of the smart devices as the to-be-started smart devices, and then the terminal determine, based on the user's selecting operation, the smart device selected by the user as the to-be-started smart device having voice recording function.

In another manner, the terminal determines smart devices to be added into a start-up list. The terminal may determine the user's location based on positioning technology, then search in prestored data for locations of smart devices having voice recording function, and then determine the smart devices having voice recording function located within a preset range including the user's location as the to-be-started smart devices.

For example, if the terminal determines that the user is in a living room, then based on the setting range, such as a circle drawn by taking the user's location as a center and 2 meters as a radius, and determines the smart devices having voice recording function located within the setting range are as the to-be-started smart devices.

Alternatively, the APP of the terminal stores locations of various smart devices, for example, devices 1-4 are placed in a living room, devices 5 and 6 are placed in a master bedroom, and devices 7 and 8 are placed in a second bedroom. When it is determined that the user is in the living room, the terminal determines that devices 1-4 are the to-be-started smart devices.

In the implementations of the embodiments of the present disclosure, if the number of the smart devices having voice recording function located within the preset range exceeds a given threshold value (for example 6), historical use data of the smart devices having voice recording function located within the preset range then is read, and the to-be-started smart device is determined based on the historical use data. The historical use data may include any one or more items of frequency of use, the time of last use, and total duration of use. For example, the terminal may order the smart devices by the frequency of use, and determine top four smart devices having higher frequency of use as the to-be-started smart devices.

In Step 204, a startup instruction is sent to the determined to-be-started smart device to start up its voice recording function.

In this step of the present disclosure, to start up the smart device may means starting up the voice recording function of the smart device. The terminal may start up the to-be-started smart device by means of the Smarthome APP.

In Step 205, voice data is received from the multiple smart devices in different locations. The voice data are obtained by the multiple smart devices via their voice recording function from a voice source, for example, a voice of a user.

In Step 206, the multiple voice data is processed based on a beam-forming technology to obtain the optimized voice data.

In this step of the present disclosure, the specific processing may include: echo canceling, signal processing and intensified processing, etc.

In Step 207, the optimized voice data is sent to an infrared remote control device so that the infrared remote control device searches for a corresponding control instruction based on voice information in the optimized voice data, searches for a corresponding infrared code based on a device name in the optimized voice data, and sends the control instruction to a smart device corresponding to the infrared code so that the smart device performs an action according to the control instruction.

In this embodiment of the present disclosure, the infrared remote control device may extract voice information from the optimized voice data, for example, "start up a television", and searches for a corresponding control instruction from prestored data. In addition, the optimized voice data also carries a device name such as "television", and the infrared remote control device may search for a corresponding infrared code and send the control instruction to a smart device corresponding to the infrared code, thereby achieving a voice control on the smart device.

In another manner, the terminal may also send the optimized voice data to a server so that the server searches for a corresponding control instruction based on voice information in the optimized voice data and sends the control instruction and a device name in the optimized voice data to an infrared remote control device, which then sends the control instruction to a smart device corresponding to the device name.

In the foregoing embodiments, the terminal may determine the to-be-started smart device in a variety of ways. For example, the terminal determines a smart device selected by the user as the to-be-started smart device, which may improve user's satisfaction for recording and optimize the user experience.

The terminal may also determine the to-be-started smart device by means of determining the user's location, which may determine a smart device closest to the user, thereby improving the effect in voice recording and ensuring the quality and recognition degree of the optimized voice data.

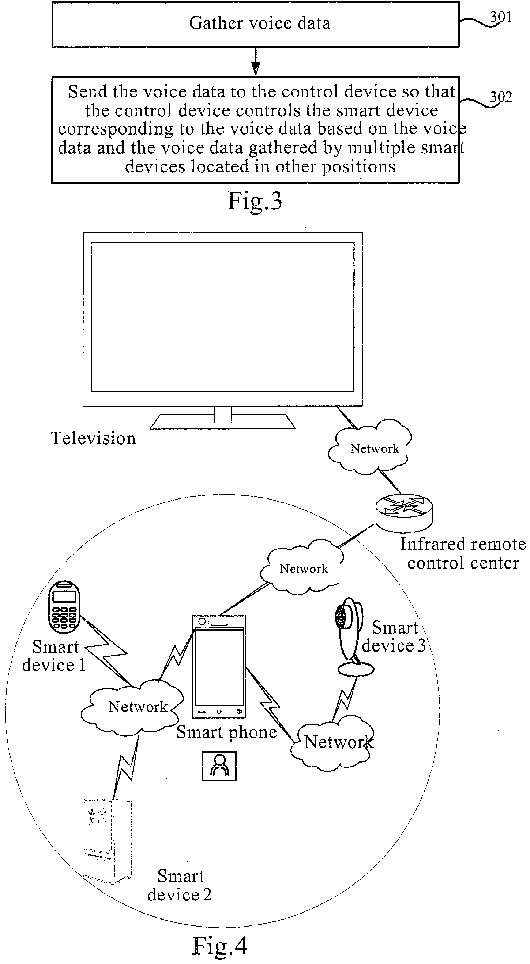

As shown in FIG. 3, which is a flow chart of another method for controlling a smart device by voice according to an exemplary embodiment, the method may be used in the smart device such as a smart appliance, a wearable device including the following steps.

In Step 301, voice data is collected.

In this embodiment of the present disclosure, the voice data in different locations is separately collected by multiple smart devices having voice recording function in different locations. The smart device may be started up based on a startup instruction sent by the control device.

In Step 302, the voice data is sent to the control device so that the control device controls the smart device corresponding to the voice data based on the voice data and the voice data collected by multiple smart devices located in other positions.

With reference to the embodiments as shown in FIG. 1 and FIG. 2, in a manner, the smart device may send the voice data to the control device such as the terminal, the terminal then processes the voice data by means of the beam forming to obtain the optimized voice data and sends the optimized voice data to the infrared remote control center in which an infrared code library is stored. The infrared code library stores names of various smart devices and corresponding infrared codes as well as voice information and corresponding control instruction. The infrared remote control center extracts the voice information from the optimized voice data to obtain a device name, queries the infrared code library to obtain the infrared code corresponding to the device name, queries a corresponding control instruction based on the voice information, and then sends the control instruction to a smart device corresponding to the infrared code to achieve a voice control on the smart device.

In another manner, after the smart device sends the optimized voice data to the terminal, the terminal may also send the optimized voice data to a server in which voice information and a corresponding control instruction are stored. The server extracts the voice information based on the optimized voice data, queries the corresponding control instruction, and sends the control instruction and the device name to an infrared remote controller, then the infrared remote controller searches for corresponding infrared code based on the device name and sends the control instruction to a smart device corresponding to the infrared code to achieve a voice control on the smart device.

In the foregoing embodiments, the smart device may send the collected voice data to the terminal so that the terminal processes the voice data to obtain the optimized voice data and controls the smart device based on the optimized voice data, thereby improving the quality and recognition degree of the optimized voice data and optimizing the user experience.

As shown in FIG. 4, FIG. 4 shows a scenario of voice control on a smart device according to an exemplary embodiment of the present disclosure. The scenario as shown in FIG. 4 includes: a smart phone serving as the control device, a smart device 1, a smart device 2 and a smart device 3 for recording, and a television serving as a controlled object. The smart phone is installed with the Smarthome APP to control various binding smart devices.

The smart phone determines the user's location based on the positioning technology, searches for the locations of prestored various smart devices having voice recording function, determines the smart device 1, the smart device 2 and the smart device 3 having voice recording function located within the setting range including the user's location (the circular region as shown in FIG. 4) as the to-be-started smart devices, starts up them to perform recording, receives their recorded voice data captured in different locations, then processes the received voice data by means of beam forming to obtain the optimized voice data "start up the television". The smart phone sends the optimized voice data to the infrared remote control center so that the infrared remote control center searches for a corresponding infrared code based on the device name "television" in the optimized voice data, searches for a control instruction based on the optimized voice data, an sends the control instruction to a smart device corresponding to the infrared code to implement a control of the television.

In the application scenario as shown in FIG. 4, the specific process for achieving the voice control on the smart device may refer to the foregoing descriptions of FIGs. 1-3, which is not elaborated herein.

Corresponding to the embodiments of the foregoing method for controlling a smart device by voice, the present disclosure further provides embodiments of the device for controlling a smart device by voice as well as the control device and the smart device thereof.

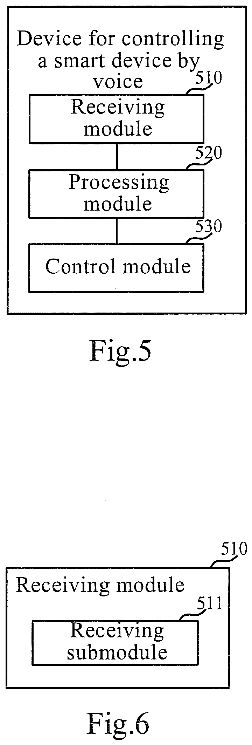

As shown in FIG. 5, which is a block diagram of a device for controlling a smart device by voice according to an exemplary embodiment of the present disclosure, the device may include: a receiving module 510, a processing module 520 and a control module 530.

The receiving module 510 is configured to receive voice data respectively from multiple smart devices located in different positions.

The processing module 520 is configured to process the multiple voice data received by the receiving module 510 to obtain optimized voice data.

The control module 530 is configured to control, based on the optimized voice data obtained by the processing module 520, the smart device corresponding to the voice data.

In the foregoing embodiment, the control device may process voice data from different locations to obtain optimized voice data, and control, based on the optimized voice data, the smart device corresponding to the optimized voice data, thereby achieving a voice control on the smart device, providing convenience for the user to control the smart device, and optimizing the user experience.

As shown in FIG. 6, which is a block diagram of another device for controlling a smart device by voice according to an exemplary embodiment of the present disclosure, in this embodiment, on the basis of the embodiment as shown in the foregoing FIG. 5, the receiving module 510 may include a receiving submodule 511.

The receiving submodule 511 is configured to receive voice data respectively received from multiple smart devices located in different positions.

In the foregoing embodiment, the control device may receive voice data collected by smart devices located in multiple positions, and process the voice data from different positions to obtain optimized voice data, thereby ensuring the quality of the optimized voice data, ensuring the accuracy in voice recognition, and achieving the voice control on the smart devices.

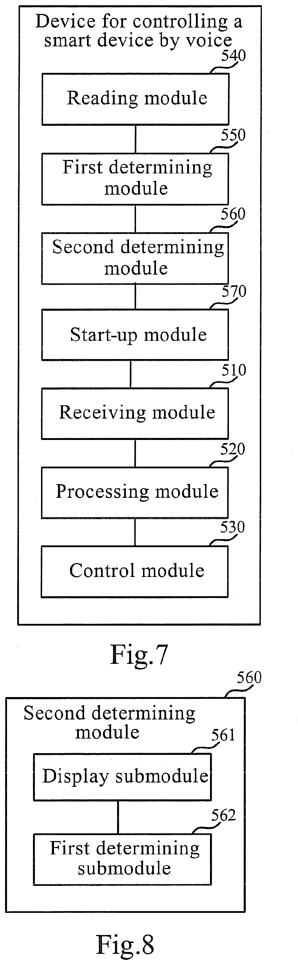

As shown in FIG. 7, which is a block diagram of another device for controlling a smart device by voice according to an exemplary embodiment of the present disclosure, in this embodiment, on the basis of the embodiment as shown in the foregoing FIG. 5, the device may further include: a reading module 540, a first determining module 550, a second determining module 560 and a start-up module 570.

The reading module 540 is configured to read information of a smart device, a software application being installed in the smart device.

The first determining module 550 is configured to determine, based on the information read by the reading module 540, smart devices having voice recording function.

The second determining module 560 is configured to determine a to-be-started smart device from the smart devices having voice recording function determined by the first determining module 550.

The start-up module 570 is configured to send a startup instruction to the to-be-started smart device determined by the second determining module 560 to start up the smart device.

In the foregoing embodiment, the control device may first determine the smart devices having voice recording function, and then determine the to-be-started smart device from the smart devices having voice recording function, thereby ensuring that the started smart device can perform recording.

As shown in FIG. 8, which is a block diagram of another device for controlling a smart device by voice according to an exemplary embodiment of the present disclosure, in this embodiment, on the basis of the embodiment as shown in the foregoing FIG. 7, the second determining module 560 may include a display submodule 561 and a first determining submodule 562.

The display submodule 561 is configured to display a list of the smart devices having voice recording function.

The first determining submodule 562 is configured to determine, based on a user's selecting operation on the list displayed by the display submodule 561, a smart device selected by the user as the to-be-started smart device having voice recording function.

In the foregoing embodiment, the control device may determine the to-be-started smart device based on the user's selection, which may better meet the user's needs and improve the user experience.

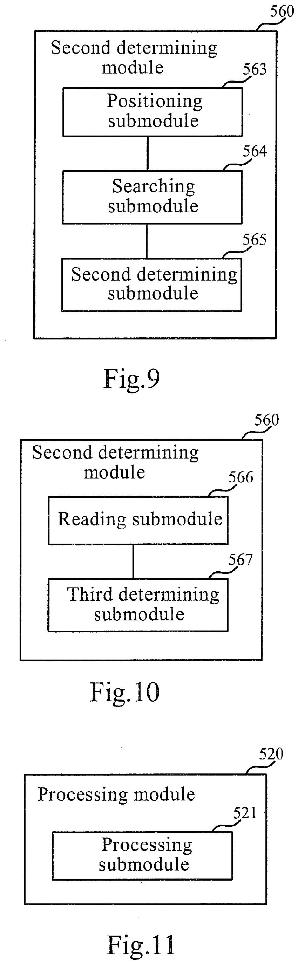

As shown in FIG. 9, which is a block diagram of another device for controlling a smart device by voice according to an exemplary embodiment of the present disclosure, in this embodiment, on the basis of the embodiment as shown in the foregoing FIG. 7, the second determining module 560 may include a positioning submodule 563, a searching submodule 564 and a second determining submodule 565.

The positioning submodule 563 is configured to position a user's location based on positioning technology.

The searching submodule 564 is configured to locate the prestored smart devices having voice recording function.

The second determining submodule 565 is configured to determine the smart device having voice recording function located within a setting range including the user's location positioned by the positioning submodule 563 as the to-be-started smart device.

In the foregoing embodiment, the control device may position a user, and then determine the to-be-started smart device based on the user's location. This manner can ensure that the to-be-started smart device is near the user's location, thereby ensuring clear voice data to be collected, leading to the subsequent optimized voice data to be recognized easily, and ensuring the accurate control of the smart device.

As shown in FIG. 10, which is a block diagram of another device for controlling a smart device by voice according to an exemplary embodiment of the present disclosure, in this embodiment, on the basis of the embodiment as shown in the foregoing FIG. 9, the second determining module 560 may further include a reading submodule 566 and a third determining submodule 567.

The reading submodule 566 is configured to, if the number of smart devices determined by the second determining submodule 565 exceeds a given threshold value, read historical use data of the smart devices having voice recording function located within the setting range.

The third determining submodule 567 is configured to determine, based on the historical use data read by the reading submodule 566, the to-be-started smart device.

The historical use data read by the reading submodule 566 includes any one or more items of frequency of use, the time of last use, and total duration of use.

In the foregoing embodiment, the control device may also determine the to-be-started smart device with reference to the historical use data of the smart device. The quality of the recorded voice data can be guaranteed because the historical use data can reflect, to a certain extent, the performance of the smart device.

As shown in FIG. 11, which is a block diagram of another device for controlling a smart device by voice according to an exemplary embodiment of the present disclosure, in this embodiment, on the basis of the embodiment as shown in the foregoing FIG. 5, the processing module 520 may include a processing submodule 521.

The processing submodule 521 is configured to process, based on the beam-forming technology, the multiple voice data received by the receiving module 510 to obtain optimized voice data.

In the foregoing embodiment, the control device may process multiple voice data based on the beam-forming technology, thereby further improving a success rate in voice recognition.

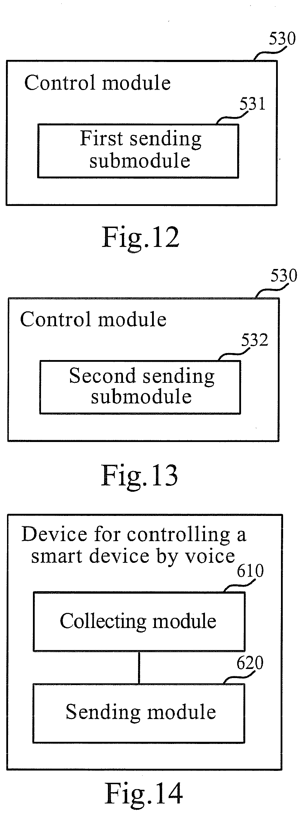

As shown in FIG. 12, which is a block diagram of another device for controlling a smart device by voice according to an exemplary embodiment of the present disclosure, in this embodiment, on the basis of the embodiment as shown in the foregoing FIG. 5, the control module 530 may include a first sending submodule 531.

The first sending submodule 531 is configured to send the optimized voice data obtained by the processing module 520 to an infrared remote control device so that the infrared remote control device searches for a corresponding control instruction based on voice information in the optimized voice data, searches for a corresponding infrared code based on a device name in the optimized voice data, and sends the control instruction to a smart device corresponding to the infrared code.

In the foregoing embodiment, the control device may send the optimized voice data to an infrared remote control center so that the infrared remote control center implements an accurate voice control on the smart device.

As shown in FIG. 13, which is a block diagram of another device for controlling a smart device by voice according to an exemplary embodiment of the present disclosure, in this embodiment, on the basis of the embodiment as shown in the foregoing FIG. 5, the control module 530 may include a second sending submodule 532.

The second sending submodule 532 is configured to send the optimized voice data obtained by the processing module to a server so that the server searches for a corresponding control instruction based on voice information in the optimized voice data and sends the control instruction and a device name in the optimized voice data to an infrared remote control device so that further the infrared remote control device sends the control instruction to a smart device corresponding to the device name.

In the foregoing embodiment, the control device may send the optimized voice data to the server so that the server and the infrared remote control center implement an accurate voice control on the smart device.

The embodiments of the device for controlling a smart device by voice as shown in FIG. 5-FIG. 13 may be used in the control device.

As shown in FIG. 14, which is a block diagram of another device for controlling a smart device by voice shown according to an exemplary embodiment of the present disclosure, the device may be used in the smart device and may include a collecting module 610 and a sending module 620.

The collecting module 610 is configured to collect voice data.

The sending module 620 is configured to send the voice data collected by the collecting module 610 to a control device so that the control device controls a smart device corresponding to the voice data based on the voice data.

In the foregoing embodiment, the smart device may send collected voice data to the control device so that the control device can control the smart device corresponding to the voice data based on the voice data and voice data collected by multiple smart devices located in other positions, thereby implementing an accurate voice control on the smart device and optimizing the user experience.

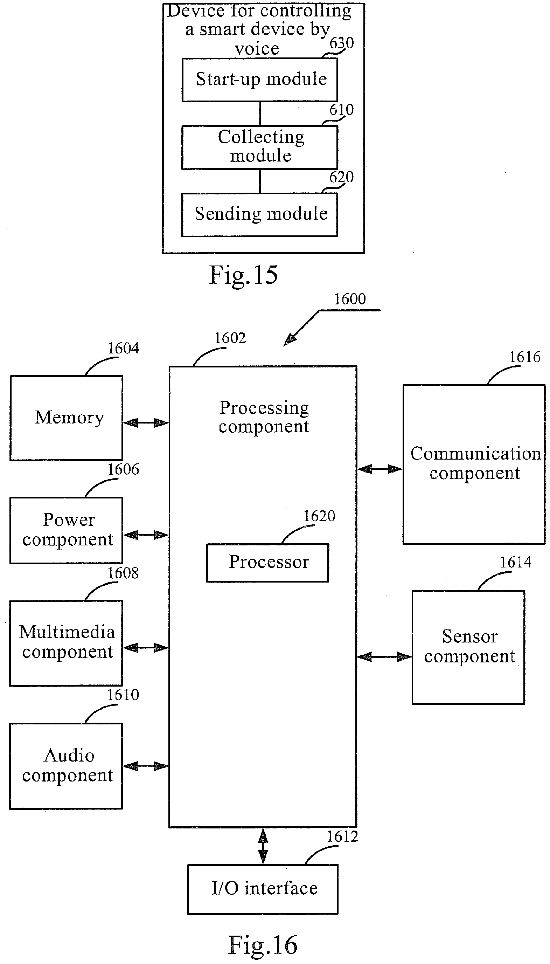

As shown in FIG. 15, which is a block diagram of another device for controlling a smart device by voice according to an exemplary embodiment of the present disclosure, in this embodiment, on the basis of the embodiment as shown in the foregoing FIG. 14, the device may further include a start-up module 630.

The start-up module 630 is configured to start up based on a startup instruction sent by the control device.

The embodiments of the device for controlling a smart device by voice as shown in FIG. 14-FIG. 15 may be used in the smart device for collecting voice data.

Specific implementations of functions and roles of units in the above device are seen in detail with reference to implementations of corresponding steps in above methods, not elaborated herein.

Where functional modules are referred to for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Correspondingly, the present disclosure further provides a control device, and the control device includes: a processor; and a memory configured to store instructions executable by a processor, where, the processor is configured to:
receive voice data separately returned by multiple smart devices;
process the multiple voice data to obtain optimized voice data; and
control, based on the optimized voice data, the smart device corresponding to the voice data.

Correspondingly, the present disclosure further provides a smart device, and the smart device includes: a processor; and a memory configured to store instructions executable by a processor, where, the processor is configured to:
collect voice data; and
send the voice data to a control device so that the control device controls a smart device corresponding to the voice data based on the voice data and the voice data collected by multiple smart devices located in other positions.

As shown in FIG. 16, FIG. 16 is a schematic structural diagram of a device for controlling a smart device by voice (such as the control device) 1600 according to an exemplary embodiment of the present disclosure. For example, the device 1600 may be a mobile phone, a computer, a digital broadcasting terminal, a message sending and receiving device, a games console, a tablet device, a medical device, a fitness device, a personal digital assistant, or the like which has an Internet accessing function.

Referring to FIG. 16, the device 1600 may include one or more of the following components: a processor component 1602, a memory 1604, a power component 1606, a multimedia component 1608, an audio component 1610, an input/output (I/O) interface 1612, a sensor component 1614 and a communications component 1616.

The processing component 1602 typically controls overall operations of the device 1600, such as the operations associated with display, telephone calls, data communications, camera operations, and recording operations. The processing component 1602 may include one or more processors 1620 to execute instructions to perform all or part of the steps in the above described methods. Moreover, the processing component 1602 may include one or more modules which facilitate the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the device 1600. Examples of such data include instructions for any applications or methods operated on the device 1600, contact data, phonebook data, messages, pictures, video, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the device 1600. The power component 1606 may include a power management system, one or more power sources, and any other components associated with the generation, management, and distribution of power in the device 1600.

The multimedia component 1608 includes a screen providing an output interface between the device 1600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1608 includes a front camera and/or a rear camera. The front camera and the rear camera may receive an external multimedia datum while the device 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone ("MIC") configured to receive an external audio signal when the device 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes one or more sensors to provide status assessments of various aspects of the device 1600. For instance, the sensor component 1614 may detect an open/closed status of the device 1600, relative positioning of components, e.g., the display and the keypad, of the device 1600, a change in position of the device 1600 or a component of the device 1600, a presence or absence of user contact with the device 1600, an orientation or an acceleration/deceleration of the device 1600, and a change in temperature of the device 1600. The sensor component 1614 may include a proximity sensor configured to detect the presence of nearby objects without any physical contact. The sensor component 1614 may also include a light sensor, such as a CMOS or CCD image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the device 1600 and other devices. The device 1600 can access a wireless network based on a communication standard, such as WiFi, 2G, or 3G, or a combination thereof. In one exemplary embodiment, the communication component 1616 receives a broadcast signal or broadcast associated information from an external broadcast management system via a broadcast channel. In one exemplary embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1604, executable by the processor 1620 in the device 1600, for performing the above-described methods performed by a control device. For example, the non-transitory computer-readable storage medium may be a ROM, a RAM, a CD-ROM, a magnetic tape, a floppy disc, an optical data storage device, and the like.

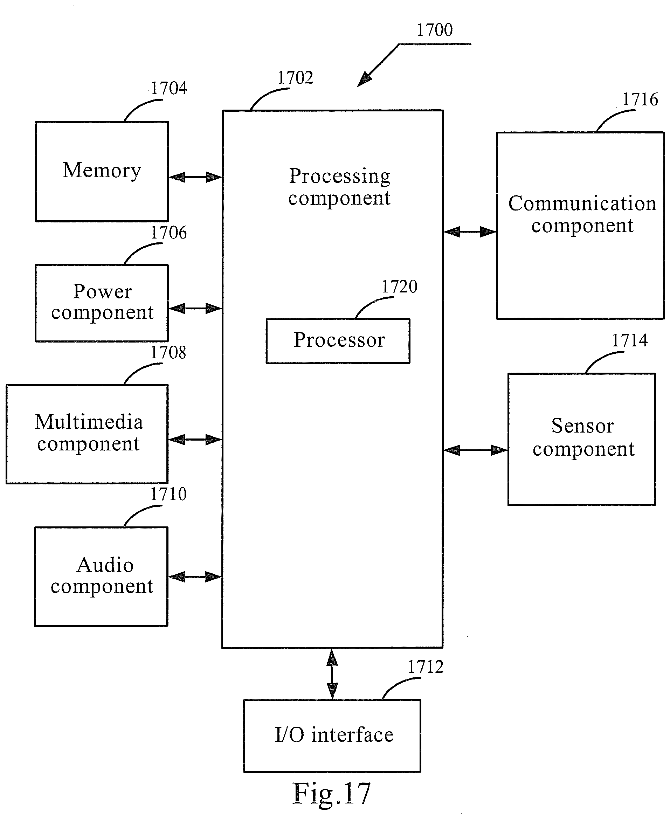

As shown in FIG. 17, FIG. 17 is a schematic structural diagram of a device for controlling a smart device by voice (such as the smart device) 1700 according to an exemplary embodiment of the present disclosure. For example, the device 1700 may be a mobile phone, a computer, a digital broadcasting terminal, a message sending and receiving device, a games console, a tablet device, a medical device, a fitness device, a personal digital assistant, or the like which has a communication module

Referring to FIG. 17, the device 1700 may include one or more of the following components: a processor component 1702, a memory 1704, a power component 1706, a multimedia component 1708, an audio component 1710, an input/output (I/O) interface 1712, a sensor component 1714 and a communications component 1717.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the device 1700. Examples of such data include instructions for any applications or methods operated on the device 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the device 1700. The power component 1706 may include a power management system, one or more power sources, and any other components associated with the generation, management, and distribution of power in the device 1700.

The multimedia component 1708 includes a screen providing an output interface between the device 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the device 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the device 1700 is in an operation mode, such as a call mode, a recording mode, and a voice recognition mode. The received audio signal may be further stored in the memory 1704 or transmitted via the communication component 1717. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the device 1700. For instance, the sensor component 1714 may detect an open/closed status of the device 1700, relative positioning of components, e.g., the display and the keypad, of the device 1700, a change in position of the device 1700 or a component of the device 1700, a presence or absence of user contact with the device 1700, an orientation or an acceleration/deceleration of the device 1700, and a change in temperature of the device 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1717 is configured to facilitate communication, wired or wirelessly, between the device 1700 and other devices. The device 1700 can access a wireless network based on a communication standard, such as WiFi, 2G, or 3G, or a combination thereof. In one exemplary embodiment, the communication component 1717 receives a broadcast signal or broadcast associated information from an external broadcast management system via a broadcast channel. In one exemplary embodiment, the communication component 1717 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the device 1700, for performing the above-described methods performed by a smart device. For example, the non-transitory computer-readable storage medium may be a ROM, a RAM, a CD-ROM, a magnetic tape, a floppy disc, an optical data storage device, and the like.

## Claims

1. A method for controlling a smart device by voice, which is implemented by a control device, comprising:
reading (201), with a software application associated with smart devices, information of the smart devices;
determining (202), based on the information, multiple smart devices having voice recording function from the smart devices;
determining (203) multiple to-be-started smart devices located in different positions from the multiple smart devices having voice recording function;
sending (204) a startup instruction to the multiple to-be-started smart devices to start up their voice recording functions;
after the sending, receiving (101) voice data respectively from the multiple to-be-started smart devices located in different positions;
processing (102) the multiple voice data by using a beam-forming technology to obtain optimized voice data;
controlling (103), based on the optimized voice data, a smart device that corresponds to the voice data,
wherein the determining (203) multiple to-be-started smart devices from the multiple smart devices having voice recording function comprises:
determining a user's location based on positioning technology;
obtaining locations of the multiple smart devices having voice recording function from prestored data; and
determining the smart devices having voice recording function located within a preset range including the user's location as the multiple to-be-started smart devices,
wherein the controlling (103), based on the optimized voice data, a smart device that corresponds to the voice data comprises:
sending (207) the optimized voice data to an infrared remote control device so that the infrared remote control device searches for a corresponding control instruction based on voice information in the optimized voice data, searches for a corresponding infrared code based on a device name in the optimized voice data, and sends the control instruction to a smart device corresponding to the infrared code.

2. The method of claim 1, further comprising:
if the number of the smart devices having voice recording function located within the preset range exceeds a given threshold value, reading historical use data of the smart devices having voice recording function located within the preset range; and
determining, based on the historical use data, the multiple to-be-started smart devices.

3. A device for controlling a smart device by voice, comprising: a reading module (540), a first determining module (550), a second determining module (560) and a start-up module (570), a receiving module (510), a processing module (520) and a control module (530); wherein
the reading module (540) is configured to read, with a software application associated with smart devices, information of the smart devices;
the first determining module (550) is configured to determine, based on the information read by the reading module (540), multiple smart devices having voice recording function from the smart devices;
the second determining module (560) is configured to determine multiple to-be-started smart devices located in different positions from the multiple smart devices having voice recording function determined by the first determining module (550); and
the start-up module (570) is configured to send a startup instruction to the multiple to-be-started smart devices determined by the second determining module (560) to start up their voice recording functions;
the receiving module (510) is configured to receive voice data respectively from the multiple to-be-started smart devices located in different positions after the start-up module has sent the startup instruction;
the processing module (520) is configured to process the multiple voice data received by the receiving module (510) by using a beam-forming technology to obtain optimized voice data; and
the control module (530) is configured to control, based on the optimized voice data obtained by the processing module (520), a smart device that corresponds to the voice data,
wherein the second determining module (560) comprises: a positioning submodule (563), a searching submodule (564) and a second determining submodule (565);
the positioning submodule (563) is configured to determine a user's location based on positioning technology;
the searching submodule (564) is configured to obtain locations of the multiple smart devices having voice recording function from prestored data; and
the second determining submodule (565) is configured to determine the smart devices having voice recording function located within a preset range including the user's location determined by the positioning submodule (563) as the multiple to-be-started smart devices,
wherein the control module (530) comprises a first sending submodule (531); and
the first sending submodule (531) is configured to send the optimized voice data obtained by the processing module (520) to an infrared remote control device so that the infrared remote control device searches for a corresponding control instruction based on voice information in the optimized voice data, searches for a corresponding infrared code based on a device name in the optimized voice data, and sends the control instruction to a smart device corresponding to the infrared code.

4. The device of claim 3, wherein the second determining module (560) further comprises: a reading submodule (566) and a third determining submodule (567);
the reading submodule (566) is configured to, if the number of smart devices determined by the second determining submodule (560) exceeds a given threshold value, read historical use data of the smart devices having voice recording function located within the preset range; and
the third determining submodule (567) is configured to determine, based on the historical use data read by the reading submodule (566), the multiple to-be-started smart devices.

5. A computer program including instructions for executing the steps of a method for controlling a smart device by voice according to any one of claims 1 to 2 when said program is executed by a processor.

6. A recording medium readable by a computer and having recorded thereon a computer program according to claim 5.

## Patentansprüche

1. Verfahren zur Steuerung eines intelligenten Geräts durch Sprache, das durch eine Steuervorrichtung implementiert wird, umfassend:
Lesen (201) von Informationen der intelligenten Geräte mittels einer Softwareanwendung, die mit den intelligenten Geräten verbunden ist,
Bestimmen (202), basierend auf den Informationen, mehrerer intelligenter Geräte mit Sprachaufzeichnungsfunktion unter den intelligenten Geräten,
Bestimmen (203) mehrerer zu startender intelligenter Geräte, die sich an unterschiedlichen Positionen befinden, unter den mehreren intelligenten Geräten mit Sprachaufzeichnungsfunktion,
Senden (204) einer Startanweisung an die mehreren zu startenden intelligenten Geräte, um ihre Sprachaufzeichnungsfunktionen zu starten,
nach dem Senden, Empfangen (101) von Sprachdaten von den mehreren zu startenden intelligenten Geräten, die sich an unterschiedlichen Positionen befinden,
Verarbeiten (102) der verschiedenen Sprachdaten unter Verwendung einer Strahlformungstechnologie, um optimierte Sprachdaten zu erhalten,
Steuern (103) eines intelligenten Geräts, das den Sprachdaten entspricht, basierend auf den optimierten Sprachdaten,
wobei das Bestimmen (203) mehrerer zu startender intelligenter Geräte unter den mehreren intelligenten Geräten mit Sprachaufzeichnungsfunktion umfasst:
Bestimmen des Standorts eines Benutzers auf der Grundlage von Ortungstechnologie,
Ermitteln der Standorte der mehreren intelligenten Geräte mit Sprachaufzeichnungsfunktion aus vorgespeicherten Daten und
Bestimmen der intelligenten Geräte mit Sprachaufzeichnungsfunktion, die sich innerhalb eines voreingestellten Bereichs befinden, der den Standort des Benutzers einschließt, als die mehreren zu startenden intelligenten Geräte,
wobei das Steuern (103) eines intelligenten Gerätes, das den Sprachdaten entspricht, basierend auf den optimierten Sprachdaten umfasst:
Senden (207) der optimierten Sprachdaten an eine Infrarot-Fernbedienungsvorrichtung, so dass die Infrarot-Fernbedienungsvorrichtung auf der Grundlage von Sprachinformationen in den optimierten Sprachdaten nach einer entsprechenden Steueranweisung sucht, auf der Grundlage eines Vorrichtungsnamens in den optimierten Sprachdaten nach einem entsprechenden Infrarot-Code sucht und die Steueranweisung an eine dem Infrarot-Code entsprechende intelligente Vorrichtung sendet.

2. Verfahren nach Anspruch 1 ferner umfassend:
wenn die Anzahl der intelligenten Geräte mit Sprachaufzeichnungsfunktion, die sich innerhalb des voreingestellten Bereichs befinden, einen gegebenen Schwellenwert überschreitet, Lesen historischer Nutzungsdaten der intelligenten Geräte mit Sprachaufzeichnungsfunktion, die sich innerhalb des voreingestellten Bereichs befinden, und
Bestimmen, basierend auf den historischen Nutzungsdaten, der mehreren zu startenden intelligenten Geräte.

3. Vorrichtung zum Steuern eines intelligenten Geräts durch Sprache, umfassend: ein Lesemodul (540), ein erstes Bestimmungsmodul (550), ein zweites Bestimmungsmodul (560), ein Startmodul (570), ein Empfangsmodul (510), ein Verarbeitungsmodul (520) und ein Steuermodul (530), wobei
das Lesemodul (540) dazu konfiguriert ist, mittels einer Softwareanwendung, die mit intelligenten Geräten verbunden ist, Informationen der intelligenten Geräte zu lesen,
das erste Bestimmungsmodul (550) dazu konfiguriert ist, auf der Grundlage der vom Lesemodul (540) gelesenen Informationen unter den intelligenten Geräten mehrere intelligente Geräte mit Sprachaufzeichnungsfunktion zu bestimmen,
das zweite Bestimmungsmodul (560) dazu konfiguriert ist, unter den mehreren intelligenten Geräten mit Sprachaufzeichnungsfunktion, die von dem ersten Bestimmungsmodul (550) bestimmt wurden, mehrere zu startende intelligente Geräte, die sich an unterschiedlichen Positionen befinden, zu bestimmen,
das Startmodul (570) dazu konfiguriert ist, eine Startanweisung an die mehreren zu startenden intelligenten Geräte zu senden, die von dem zweiten Bestimmungsmodul (560) bestimmt werden, um ihre Sprachaufzeichnungsfunktionen zu starten,
das Empfangsmodul (510) dazu konfiguriert ist, Sprachdaten von den mehreren zu startenden intelligenten Geräten, die sich an unterschiedlichen Positionen befinden, zu empfangen, nachdem das Startmodul die Startanweisung gesendet hat,
das Verarbeitungsmodul (520) dazu konfiguriert ist, die von dem Empfangsmodul (510) empfangenen verschiedenen Sprachdaten unter Verwendung einer Strahlformungstechnologie zu verarbeiten, um optimierte Sprachdaten zu erhalten, und
das Steuermodul (530) dazu konfiguriert ist, auf der Grundlage der vom Verarbeitungsmodul (520) erhaltenen optimierten Sprachdaten ein intelligentes Gerät zu steuern, das den Sprachdaten entspricht,
wobei das zweite Bestimmungsmodul (560) umfasst: ein Ortungs-Submodul (563), ein Such-Submodul (564) und ein zweites Bestimmungs-Submodul (565),
das Ortungs-Submodul (563) dazu konfiguriert ist, den Standort eines Benutzers auf der Grundlage von Ortungstechnologie zu bestimmen,
das Such-Submodul (564) dazu konfiguriert ist, Standorte der mehreren intelligenten Geräte mit Sprachaufzeichnungsfunktion aus vorgespeicherten Daten zu erhalten, und
das zweite Bestimmungs-Submodul (565) dazu konfiguriert ist, die intelligenten Geräte mit Sprachaufzeichnungsfunktion, die sich innerhalb eines voreingestellten Bereichs befinden, der den von dem Ortungs-Submodul (563) bestimmten Standort des Benutzers einschließt, als die mehreren zu startenden intelligenten Geräte zu bestimmen,
wobei das Steuermodul (530) ein erstes Sende-Submodul (531) umfasst und
das erste Sende-Submodul (531) dazu konfiguriert ist, die von dem Verarbeitungsmodul (520) erhaltenen optimierten Sprachdaten an eine Infrarot-Fernbedienungsvorrichtung zu senden, so dass die Infrarot-Fernbedienungsvorrichtung auf der Grundlage von Sprachinformationen in den optimierten Sprachdaten nach einer entsprechenden Steueranweisung sucht, auf der Grundlage eines Gerätenamens in den optimierten Sprachdaten nach einem entsprechenden Infrarot-Code sucht und die Steueranweisung an ein dem Infrarot-Code entsprechendes intelligentes Gerät sendet.

4. Vorrichtung nach Anspruch 3, wobei das zweite Bestimmungsmodul (560) ferner umfasst: ein Lese-Submodul (566) und ein drittes Bestimmungs-Submodul (567), wobei
das Lese-Submodul (566) dazu konfiguriert ist, historische Nutzungsdaten der intelligenten Geräte mit Sprachaufzeichnungsfunktion, die sich innerhalb des voreingestellten Bereichs befinden, zu lesen, wenn die von dem zweiten Bestimmungs-Submodul (560) bestimmte Anzahl von intelligenten Geräten einen gegebenen Schwellenwert überschreitet, und
das dritte Bestimmungs-Submodul (567) dazu konfiguriert ist, auf der Grundlage der von dem Lese-Submodul (566) gelesenen historischen Nutzungsdaten die mehreren zu startenden intelligenten Geräte zu bestimmen.

5. Computerprogramm mit Befehlen zum Ausführen der Schritte eines Verfahrens zum Steuern eines intelligenten Geräts durch Sprache nach einem der Ansprüche 1 bis 2, wenn das Programm von einem Prozessor ausgeführt wird.

6. Aufzeichnungsmedium, das von einem Computer gelesen werden kann und auf dem ein Computerprogramm nach Anspruch 5 aufgezeichnet ist.

## Revendications

1. Procédé pour commander un dispositif intelligent par la voix, qui est mis en œuvre par un dispositif de commande, comprenant :
la lecture (201), avec une application logicielle associée à des dispositifs intelligents, d'informations des dispositifs intelligents ;
la détermination (202), sur la base des informations, de multiples dispositifs intelligents ayant une fonction d'enregistrement vocal parmi les dispositifs intelligents ;
la détermination (203) de multiples dispositifs intelligents à démarrer situés dans différentes positions parmi les multiples dispositifs intelligents ayant une fonction d'enregistrement vocal ;
l'envoi (204) d'une instruction de démarrage aux multiples dispositifs intelligents à démarrer pour démarrer leur fonction d'enregistrement vocal ;
après l'envoi, la réception (101) de données vocales respectivement en provenance des multiples dispositifs intelligents à démarrer situés dans différentes positions ;
le traitement (102) des multiples données vocales en utilisant une technologie de formation de faisceau pour obtenir des données vocales optimisées ;
la commande (103), sur la base des données vocales optimisées, d'un dispositif intelligent qui correspond aux données vocales,
dans lequel la détermination (203) de multiples dispositifs intelligents à démarrer parmi les multiples dispositifs intelligents ayant une fonction d'enregistrement vocal comprend :
la détermination de l'emplacement d'un utilisateur sur la base d'une technologie de positionnement ;
l'obtention d'emplacements des multiples dispositifs intelligents ayant une fonction d'enregistrement vocal à partir de données préstockées ; et
la détermination des dispositifs intelligents ayant une fonction d'enregistrement vocal situés dans une plage prédéfinie incluant l'emplacement de l'utilisateur comme les multiples dispositifs intelligents à démarrer,
dans lequel la commande (103), sur la base des données vocales optimisées, d'un dispositif intelligent qui correspond aux données vocales comprend :
l'envoi (207) des données vocales optimisées à un dispositif de télécommande infrarouge de sorte que le dispositif de télécommande infrarouge recherche une instruction de commande correspondante sur la base d'informations vocales dans les données vocales optimisées, recherche un code infrarouge correspondant sur la base d'un nom de dispositif dans les données vocales optimisées, et envoie l'instruction de commande à un dispositif intelligent correspondant au code infrarouge.

2. Procédé selon la revendication 1, comprenant en outre :
si le nombre des dispositifs intelligents ayant une fonction d'enregistrement vocal situés dans la plage prédéfinie dépasse une valeur de seuil donnée, la lecture de données d'utilisation historiques des dispositifs intelligents ayant une fonction d'enregistrement vocal situés dans la plage prédéfinie ; et
la détermination, sur la base des données d'utilisation historiques, des multiples dispositifs intelligents à démarrer.

3. Dispositif pour commander un dispositif intelligent par la voix, comprenant : un module de lecture (540), un premier module de détermination (550), un second module de détermination (560) et un module de démarrage (570), un module de réception (510), un module de traitement (520) et un module de commande (530) ; dans lequel
le module de lecture (540) est configuré pour lire, avec une application logicielle associée à des dispositifs intelligents, des informations des dispositifs intelligents ;
le premier module de détermination (550) est configuré pour déterminer, sur la base des informations lues par le module de lecture (540), de multiples dispositifs intelligents ayant une fonction d'enregistrement vocal parmi les dispositifs intelligents ;
le second module de détermination (560) est configuré pour déterminer de multiples dispositifs intelligents à démarrer situés dans différentes positions parmi les multiples dispositifs intelligents ayant une fonction d'enregistrement vocal déterminés par le premier module de détermination (550) ; et
le module de démarrage (570) est configuré pour envoyer une instruction de démarrage aux multiples dispositifs intelligents à démarrer déterminés par le second module de détermination (560) pour démarrer leur fonction d'enregistrement vocal ;
le module de réception (510) est configuré pour recevoir des données vocales respectivement en provenance des multiples dispositifs intelligents à démarrer situés dans différentes positions après que le module de démarrage a envoyé l'instruction de démarrage ;
le module de traitement (520) est configuré pour traiter les multiples données vocales reçues par le module de réception (510) en utilisant une technologie de formation de faisceau pour obtenir des données vocales optimisées ; et
le module de commande (530) est configuré pour commander, sur la base des données vocales optimisées obtenues par le module de traitement (520), un dispositif intelligent qui correspond aux données vocales,
dans lequel le second module de détermination (560) comprend : un sous-module de positionnement (563), un sous-module de recherche (564) et un deuxième sous-module de détermination (565) ;
le sous-module de positionnement (563) est configuré pour déterminer l'emplacement d'un utilisateur sur la base d'une technologie de positionnement ;
le sous-module de recherche (564) est configuré pour obtenir des emplacements des multiples dispositifs intelligents ayant une fonction d'enregistrement vocal à partir de données préstockées ; et
le deuxième sous-module de détermination (565) est configuré pour déterminer les dispositifs intelligents ayant une fonction d'enregistrement vocal situés dans une plage prédéfinie incluant l'emplacement de l'utilisateur déterminé par le sous-module de positionnement (563) comme les multiples dispositifs intelligents à démarrer,
dans lequel le module de commande (530) comprend un premier sous-module d'envoi (531) ; et
le premier sous-module d'envoi (531) est configuré pour envoyer les données vocales optimisées obtenues par le module de traitement (520) à un dispositif de télécommande infrarouge de sorte que le dispositif de télécommande infrarouge recherche une instruction de commande correspondante sur la base d'informations vocales dans les données vocales optimisées, recherche un code infrarouge correspondant sur la base d'un nom de dispositif dans les données vocales optimisées, et envoie l'instruction de commande à un dispositif intelligent correspondant au code infrarouge.

4. Dispositif selon la revendication 3, dans lequel le second module de détermination (560) comprend en outre : un sous-module de lecture (566) et un troisième sous-module de détermination (567) ;
le sous-module de lecture (566) est configuré pour, si le nombre de dispositifs intelligents déterminés par le deuxième sous-module de détermination (560) dépasse une valeur de seuil donnée, lire des données d'utilisation historiques des dispositifs intelligents ayant une fonction d'enregistrement vocal situés dans la plage prédéfinie ; et
le troisième sous-module de détermination (567) est configuré pour déterminer, sur la base des données d'utilisation historiques lues par le sous-module de lecture (566), les multiples dispositifs intelligents à démarrer.

5. Programme d'ordinateur incluant des instructions pour exécuter les étapes d'un procédé pour commander un dispositif intelligent par la voix selon l'une quelconque des revendications 1 à 2 lorsque ledit programme est exécuté par un processeur.

6. Support d'enregistrement lisible par un ordinateur et sur lequel est enregistré un programme d'ordinateur selon la revendication 5.
